# EUROPÄISCHE PATENTSCHRIFT

(11) **EP 0 523 205 B1**
(45) Veröffentlichungstag und Bekanntmachung des Hinweises auf die Patenterteilung: **13.03.1996**
(21) Anmeldenummer: 92903042.7
(22) Anmeldetag: 24.01.1992
(51) Int. Cl.: B21B 38/10, G01B 7/14, G01B 11/14

(54) **WALZ- ODER WALZGIESSANLAGE MIT EINER MESSEINRICHTUNG ZUR WALZSPALTREGELUNG UND VERFAHREN ZU DEREN BETRIEB**
ROLLING OR ROLLER CASTING INSTALLATION WITH MEASURING DEVICE FOR ADJUSTING A ROLLER GAP AND PROCESS OF OPERATING IT
INSTALLATION DE LAMINAGE OU DE LAMINAGE ET COULAGE AVEC DISPOSITIF DE MESURE UTILE POUR REGLER L'EMPRISE ET SON PROCEDE D'EXPLOITATION

(30) Priorität: 01.02.1991 CH 315/91
(43) Veröffentlichungstag der Anmeldung: 20.01.1993
(73) Patentinhaber: LAUENER ENGINEERING LTD., CH-3645 Gwatt (CH)
(72) Erfinder: FRISCHKNECHT, Bruno, CH-3645 Gwatt (CH); MESSERLI, Peter, CH-3074 Muri (CH); FANKHAUSER, Daniel, CH-3600 Thurn (CH); RODER, Rudolf, CH-3604 Thun (CH); EIGEL, Rolf, CH-3657 Schwanden (CH)
(74) Vertreter: Patentanwälte Breiter + Wiedmer AG
(86) Internationale Anmeldenummer: CH9200015
(87) Internationale Veröffentlichungsnummer: WO9213652

(56) Entgegenhaltungen:
- DE-A- 2 503 130
- JP-A-59 191 555
- JP-A-62 214 812
- JP-B-47 032 908

## Beschreibung

Die Erfindung bezieht sich auf eine Walz- oder Walzgiessanlage nach dem Oberbegriff von Patentanspruch 1. Weiter betrifft die Erfindung ein Verfahren zum Betrieb der Anlage und zu der Einmittung der Messeinrichtung in der Anlage.

Messeinrichtungen zur Regelung des Walzspaltes arbeiten unter erschwerten Einsatzbedingungen; die hauptsächlichsten Einwirkungen, weiche sich einzeln oder kombiniert schädlich auswirken können, sind:
- Sehr grober Betrieb
- Grosser Durchsatz von Kühlmitteln wie beispielsweise Kerosen, Paraffinölen, Wasseremulsionen
- Hohe Umgebungstemperaturen, bei Kaltwalzanlagen bis etwa 80°C, bei Warmwalzanlagen bis etwa 200°C, bei Walzgiessanlagen noch höher
- Explosive Medien-Umgebung.

Als Vorwalzwerke eingesetzte Warmwalzanlagen erzeugen Banddicken im Bereich von 4 - 60 mm, Walzgiessanlagen von 4 bis 30 mm und Kaltwalzanlagen von praktisch 0 bis etwa 10 mm. Selbstverständlich sind diese Bereichsangaben nur beispielhaft.

Die sich abnutzenden Arbeitswalzen werden periodisch um je etwa 0,02 bis 0,1 mm nachgeschliffen, bis deren Ballendurchmesser nur noch etwa 90% des ursprünglichen Durchmessers beträgt.

Die Banddicke wird im Feinbereich beeinflusst durch die Veränderung der Walzkraft, beispielsweise in Folge von Schwankungen in der Härte des Metalls, einlaufenden Toleranzfehlern im Band, Schwankungen der Bandzugkräfte, Walzenexzentrität und/oder Temperaturänderungen.

Insbesondere bei Kaltwalzanlagen sind die Banddickentoleranzen sehr eng. So wird beispielsweise bei 0,2 mm dickem Band eine Toleranz von +/- 1,6 µm verlangt. Dies bedingt eine Positioniergenauigkeit der Arbeitswalzen von wenigstens +/-1 µm.

Es sind zahlreiche Messeinrichtungen zur Regelung des Walzspaltes bekannt.

Die CH,A 649012 beansprucht eine Messeinrichtung, welche mit einem Support an einem Festteil befestigt ist. An zwei Hebelstangen ist je eine Backe befestigt, welche durch Federkraft einends an stirnseitig reduzierten Ballendurchmessern aufliegen. Eine Aenderung des Walzenabstandes wird mit einem vorgespannten Stahldraht auf eine Messeinrichtung übertragen. Mit dieser Messeinrichtung kann der Walzspalt sowohl analog als auch digital erfasst werden.

Die DE,A 3512290 offenbart eine Messeinrichtung, welche zwischen zwei zu messenden Arbeitswalzen angeordnet ist. Im Bereich beider Stirnseiten der Arbeitswalzen sind je vier Stützrollen sternförmig angeordnet. Sie liegen an den Ballenoberflächen auf und sind an einem Messkörper schwenkbeweglich gelagert. Zur gegenseitigen Synchronisaton der Stützrollen sind diese mit einem Zahnradgetriebe mechanisch verbunden. Die Umwandlung der mechanischen Bewegung in ein elektrisches Signal erfolgt über einen im Messkörper untergebrachten Messtaster.

Die US,A 4063363 schliesslich zeigt eine Messvorrichtung, welche an einem unteren Einbaustück angeschraubt ist. Eine Stange dient als Führung von zwei Backen, die mit einer Feder an die Messflächen mit reduziertem Durchmesser gedrückt werden. Parallel zur Walzspaltverstellung ist ein Lineargeber angeordnet, welcher die Verstellung der aufliegenden Backen im direkten Verhältnis misst. Die beidends stirnseitig angeordnete Messeinrichtung muss beim Walzenwechsel mit ausgebaut werden.

Die JP-A-62-214812 offenbart eine Walzanlage nach dem Oberbegriff von Anspruch 1 Das dort offenbarte Messgerät für einen Walzspalt umfasst zwei Wirbelstromsensoren 19,20, welche auf einer scherenartig spreizbaren Tragvorrichtung montiert sind. Der Walzspalt wird nicht im Bereich des kürzesten Abstandes, auf der Walzebene gemessen, sondern indirekt mit Hilfe seitlicher Hilfsgrössen.

Die DE,A 2503130 bezieht sich auf einen induktiven, kapazitiven oder als Laser ausgebildeten Messgeber, der zwischen zwei Walzen angeordnet und über einen Geberhalter federnd auf einer Walze abgestützt ist. Auf einem Walzenzapfen ist eine Gleitfläche ausgebildet, die Messeinrichtung arbeitet also nicht berührungsfrei.

Keine der bekannten Messeinrichtungen zur kontinuierlichen Kontrolle des Walzspaltes während des Betriebs vermag alle Anforderungen moderner Walzanlagen bezüglich der Präzision, der Funktionstüchtigkeit, der Langlebigkeit, einer einfachen Montage und eines wirtschaftlichen Betriebs zu genügen.

Die Erfinder haben sich die Aufgabe gestellt, eine mit einer berührungsfrei arbeitenden Messeinrichtung versehene Walz- oder Walzgiessanlage der eingangs genannten Art zu schaffen, welche bei einer laufenden Walzanlage alle vorstehenden Anforderungen erfüllt, den Abstand der Arbeitswalzen auf einfachere, zuverlässigere und kostengünstige Weise direkt zu messen vermag und Korrekturen an die Steuerung der Stellorgane zur Walzspaltregelung weitergibt. Weiter soll ein Verfahren zum Betrieb und zum Einmitten einer vorgenannten Messeinrichtung geschaffen werden.

In bezug auf die Walz- oder Walzgiessanlage wird die Aufgabe erfindungsgemäss nach dem Kennzeichen von Patentanspruch 1 gelöst. Spezielle und weiterbildende Ausführungsformen der erfindungsgemässen Walz- oder Walzgiessanlage sind Gegenstand von abhängigen Patentansprüchen.

Als Walzensatz wird eine Einheit, gebildet aus Arbeitswalzen, Stützwalzen und Lagergehäusen, letztere auch Einbaustücke genannt, bezeichnet. Weder ein Messkopf noch ein Messbügel ist am Walzensatz befestigt, was ein Demontieren ohne Betriebsunterbruch erlaubt.

Die Erfindung betrifft ein Betriebverfahren einer Walz- oder Walzgiessanlage mit einer in-line arbeitenden Messeinrichtung. Eine statische Einstell- und Messvorrichtung, wie sie z.B. aus der JP,A 59191555 bekannt ist, kann während des Betriebs nicht eingesetzt werden, weil der Raum zwischen den Führungs- und Umlenkrollen vom Stahlstrang ausgefüllt ist. Vor dem Beginn des Giessens werden die Rollen auseinandergedrückt, ein Doppelsensor abgesenkt und der Rollenabstand statisch gemessen, wobei für ein Rollenpaar auf verschiedenen Höhen zahlreiche Messungen durchgeführt und der geringste Abstand rechnerisch ermittelt wird.

Der Arbeitsbereich eines bei der Erfindung verwendeten Sensors dagegen liegt stets in der Walzebene, wie die durch die Walzenachsen gebildete Ebene genannt wird. Von wesentlicher Bedeutung ist, dass eine während des Betriebs arbeitende Sensorfläche nie eine Messfläche einer Arbeits- oder Stützwalze berührt. Die Sensoren sind bevorzugt als Wirbelstromsonde, bei Walzgiessanlagen auch als Lasersonde, kapazitiv arbeitende Sonden oder Ultraschallsonden ausgebildet.

Folgende Abstände können zur Walzspaltregelung beigezogen werden, wobei der Konstrukteur den Stirnbereich des Walzensatzes entsprechend zu gestalten hat:
a) Reduzierte Ballendurchmesser der Arbeitswalzen, mit zwischen den Messflächen zugeordnetem Doppelsensor
b) Reduzierte Ballendurchmesser der Arbeitswalzen, mit zwischen einer Messfläche und einer Stützwalze angeordneten Sensoren, die in einem Messbügel gehaltert sind
c) Reduzierte Ballendurchmesser der Stützwalzen, mit zwischen einer Messfläche und einer Arbeitswalze angeordneten Sensoren, die in einem Messbügel gehaltert sind
d) Reduzierte Ballendurchmesser der Arbeits- und Stützwalzen, mit zwischen den Messflächen angeordneten Doppelsensoren, die in einem Messbügel gehaltert sind. So kann der Walzspalt über die Messflächen der Arbeits- und/oder Stützwalzen gemessen werden.

Bei einer Messung Stützwalze - Stützwalze (Varianten c und d) ist die Walzendeformation ausgeschaltet.

Bei allen Varianten ist die Anordnung der Sensoren im Bereich der Walzebene von erfindungswesentlicher Bedeutung. Alle Walzen haben Spiel, wenn auch nur ein geringes, z.B. 0,1 mm. Während des Betriebs wird das Spiel in Richtung der Walzebene unterdrückt, senkrecht dazu jedoch nicht. Nur bei Messungen ausserhalb der Walzebene wirkt sich dieses nicht unterdrückte Spiel aus, z.B. bei Messungen gemäss der oben erwähnten JP,A 62214812.

Die Messflächen der Arbeitswalzen mit reduziertem Ballendurchmesser treten beim Walzen oder Giesswalzen nie in Kontakt mit dem zu bearbeitenden Metall, sie werden deshalb nicht abgenutzt. Beim Nachschleifen der Ballenflächen muss lediglich darauf geachtet werden, dass die Messflächen coaxial bleiben.

Der bei aufeinandergelegten Arbeitswalzen, also einem Walzspalt gleich Null, gebildete Abstand der Messflächen setzt sich nach Variante a) zusammen aus der Summe der Abstände des oberen Sensors von der oberen Messfläche, des unteren Sensors von der unteren Messfläche und dem unveränderlichen Abstand der beiden Sensorenoberflächen. Offensichtlich ist es für das Messresultat nicht von wesentlicher Bedeutung, dass der Doppelsensor exakt in der Mitte zwischen den Messflächen positioniert ist. Der Doppelsensor wird dennoch bevorzugt eingemittet, um einen Kontakt oder einen Beinahekontakt mit einer Messfläche zu vermeiden und einen gewissen Spielraum zu haben.

Nach den Varianten b) bis d) ist der Messbügel der konstante Abstand, wie bei a) sind lediglich Abstandsänderungen wesentlich, nicht absolute Abstände.

Die eigentlichen, marktüblichen Sensoren bzw. Doppelsensoren müssen insbesondere folgende Anforderungen erfüllen:
- Reproduzierbare Messgenauigkeit von etwa 1 µm
- Resistanz gegen die Arbeitsatmosphäre, insbesondere thermische und chemische Widerstandsfähigkeit
- Genaue Linearmessung über alle Distanzen
- Unempfindlichkeit gegen Walzöl und Schmutz.

Eine hochpräzise Messung ist nur gewährleistet, wenn beide Sensoren der Messeinrichtung im Bereich der Walzebene angeordnet sind, damit sich - wie obenstehend erläutert - das Spiel der Walzen nicht auswirkt.

Im folgenden wird einfachheitshalber nur die oben mit a) bezeichnete Variante im Detail beschrieben, für die Varianten b) bis d) gilt ähnliches.

Auf die stirnseitigen Enden der Arbeitswalzen mit reduziertem Ballendurchmesser kann je wenigstens ein nicht magnetischer Messring aufgebracht sein, wobei der bzw. der in radialer Richtung äusserste Messring die zu den Walzenballen koaxiale Messfläche bildet.

Das bevorzugte Aufbringen von Messringen hängt vom Messondentyp, vom Einsatz von Walzölen und einer Verschmutzungsgefahr ab. So ist beispielsweise bei Walzgiessanlagen, wenn sie mit Lasersonden arbeiten, kein Aufbringen von Messringen notwendig, weil auch metallische Oberflächen mit guter Präzision und Linearität reproduzierbar gemessen werden können. Lasersonden können jedoch nicht verwendet werden, wenn Walzöle eingesetzt werden und/oder eine Verschmutzungsgefahr besteht. Kapazitiv arbeitende Sonden eignen sich ebenfalls nur für Giesswalzanlagen.

Wirbelstromsonden dagegen sind nicht in der Lage, den Abstand zu metallischen Oberflächen mit der erforderlichen Linearität zu messen. Beim Einsatz von Wirbelstromsensoren, welche den grossen Vorteil aufweisen, weder auf Walzöle noch auf Verschmutzungen anzusprechen, muss mit nichtmagnetischen Messoberflächen gearbeitet werden. Der Einsatz von nichtmagnetischen Messringen ist deshalb bei Wirbelstromsonden unerlässlich.

In der Praxis haben sich insbesondere vorgefertigte Messringe aus rostfreiem Stahl bewährt, welche aufgeschrumpft und eingeschliffen werden. Nichtmagnetische Messflächen, insbesondere aus rostfreiem Stahl, können jedoch auch mit bekannten physikalischen oder chemischen Abscheidungsverfahren aufgebracht und wenn notwendig eingeschliffen werden. Einfachheitshalber werden solche Schichten auch als Messringe bezeichnet.

Der Messkopf oder der Messbügel einer Messeinrichtung weist einen nicht am Walzensatz befestigten Betätigungsmechanismus auf, der entfern- und/oder demontierbar ist.

Die Gestaltung eines vorzugsweise angebrachten Betätigungsmechanismus für die einstellbare, reproduzierbare Positionierung der Sensoren im Zwischenraum der Messflächen ist durch die engen Raumverhältnisse in einer Walz- oder Walzgiessanlage beschränkt. Bevorzugt ist ein höhenverstellbarer, horizontaler Ausleger, welcher auch schwenkbar sein kann.

Der Messkopf oder der Messbügel kann in Richtung des Walzspalts beim Anstellen an die Messflächen zentrierende Anschrägungen aufweisen, welche zweckmässig symmetrisch sind. Je nach Ausgestaltung können die Anschrägungen z.B. keil- oder kegelstumpfförmig ausgebildet sein.

In bezug auf das erfindungsgemässe Verfahren zum Betrieb der Anlage wird zum laufenden Kompensieren einer Exzentrität von Arbeitswalzen zum Walzen oder Walzgiessen die Summe der beiden Abstände der Messflächen von den zugeordneten Sensorflächen laufend gemessen und von einem Prozessrechner mit einem Sollwert verglichen, bei einer Abweichung um mehr als einen einstellbaren Wert vom Soll-Wert werden Aktuatoren zur Anpassung des Walzenabstandes ausgelöst. Die Aktuatoren wirken z.B. auf Stellorgane, Ventile und dgl.

Das laufende Kompensieren der Exzentrität ist für die Gleichmässigkeit eines Walz- oder Walzgiessbandes von grosser Bedeutung. Je nach verlangter Präzision erfolgt eine Kompensation bei z.B. einer Abweichung von 1 - 100 µm vom Sollwert. Mit den heutigen technischen Mitteln kann eine Kompensation bis etwa 10 Umdrehungen der Arbeitswalzen pro Sekunde erfolgen.

Bezüglich des Verfahrens zum Einmitten einer Messeinrichtung in einer Anlage nach Anspruch 8, welche einen zurückziehbaren Messkopf oder einen Messbügel mit Anschrägungen aufweist, wird der vertikal verschiebbar am Ausleger geführte Messkopf oder Messbügel durch Andrücken der Anschrägungen auf den Messflächen der Arbeitswalzen mit reduziertem Ballendurchmesser oder die entsprechenden Ballenflächen formschlüssig ausgerichtet, in dieser Einmittungsposition fixiert, und der Ausleger wieder in die Ruheposition gefahren. Eine weiterführende Ausführungsform dieses Verfahrens ist Gegenstand des abhängigen Anspruchs 12.

Dieser Einmittungsvorgang muss nur bei einem Walzenwechsel oder dgl. wiederholt werden. Bei einem in der oder parallel zur Tangentialebene im Walzspalt schwenkbaren Ausleger erfolgt der Einmittungsvorgang nach dem Einschwenken.

Das Einmitten erfolgt vorzugsweise mit dem Einstellen der Walzanlage vor dem Walzbeginn. Dazu werden die Arbeitswalzen zusammengefahren und bei einem Walzspalt von 0 mm mit definierter Anstellkraft langsam gedreht, während der Messkopf oder der Messbügel angestellt ist. Die Anstellkraft beträgt beispielsweise 10 bis 50%, insbesondere etwa 30% der maximal zulässigen Walzkraft, und die Arbeitswalzen drehen mit einer Umfanggeschwindigkeit von 5 bis 30m/min.

Das vorzugsweise angewendete Einmitten mit definierter Anstellkraft hat den Vorteil, dass die Messeinrichtung auf die belastete Pass-Linie eingestellt wird. Die Pass-Linie ist die horizontale Linie, welche bei einem Walzspalt von 0 mm zwischen den Arbeitswalzen hindurch führt. Wegen der elastischen Dehnung des Walzenständers bei Belastung können die belastete und die unbelastete Pass-Linie in einer Grössenordnung von 1 bis 2 mm auseinanderliegen.

Die Erfindung ist universal verwendbar, unabhängig vom Konstruktionsprinzip der Walz- und Walzgiessanlagen. Bevorzugt sind jedoch Walzwerkgerüste für Metalle, auch Ständer genannt, mit hydraulischen Anstellzylindern.

Die Sensoren, eingeschlossen Doppelsensoren, werden je nach den Anforderungen und der Verwendung von Hilfsmitteln wie Walzölen oder dgl., aus dem auf den Markt befindlichen Angebot ausgewählt oder aber auch für die jeweilige Verwendung speziell hergestellt. Bevorzugt sind Wirbelstromsensoren, weil sie nicht auf Walzöle oder Verschmutzungen ansprechen. Insbesondere für Walzgiessanlagen können jedoch auch Ultraschall-, Laser- oder kapazitive Sonden eingesetzt werden.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 ein Quartogerüst zum Kaltwalzen von Bändern, mit einer bekannten Messeinrichtung,
- Fig. 2 eine Messeinrichtung zur direkten Regelung des Walzspaltes an den Arbeitswalzen,
- Fig. 3 eine perspektivische Ansicht eines Doppelsensors,
- Fig. 4 das stirnseitige Ende einer Arbeits- oder Stützwalze mit reduziertem Ballendurchmesser,
- Fig. 5 eine Variante einer Messeinrichtung,
- Fig. 6 eine weitere Variante einer Messeinrichtung,
- Fig. 7 ein Quartogerüste mit einem Messbügel zur Regelung des Walzspaltes an den Stützwalzen, und
- Fig. 8 eine hydraulische Walzspaltregelanlage.

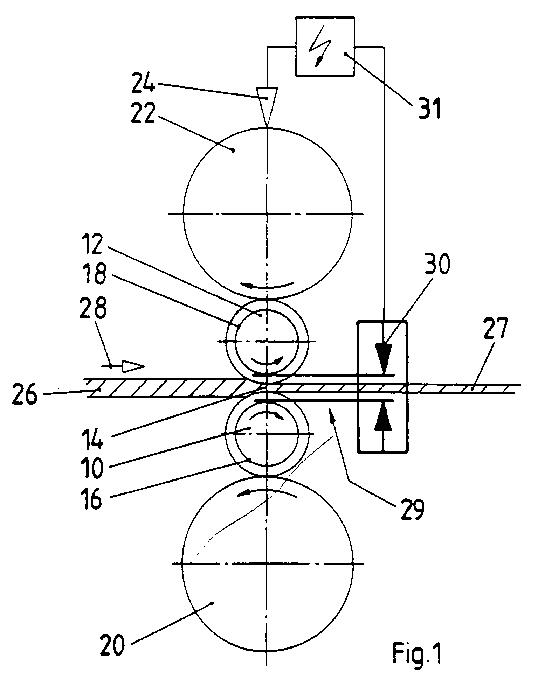

In Fig. 1 werden die wesentlichen funktionellen Teile eines Quartogerüstes zum Kaltwalzen von Bändern dargestellt, der Ständer mit den Lagergehäusen ist der Uebersichtlichkeit wegen weggelassen. Die untere und die obere Arbeitswalze 10, 12 definieren einen Walzspalt 14. Diese Arbeitswalzen haben beidends einen reduzierten Ballendurchmesser, welcher die zu den Walzenballen koaxialen Messflächen 16, 18 bilden. Je eine untere und obere Stützwalze 20, 22 überträgt die Walzkraft von den Anstellzylindern 24, einfachheitshalber ist nur der obere angedeutet, auf die entsprechenden Arbeitswalzen 10, 12. Selbstverständlich können, bei entsprechender Ausgestaltung der Walzanlage, statt obere und untere linke und rechte Arbeits- und Stützwalzen angeordnet sein.

Ein einlaufendes Metallband 26 wird in Richtung des Pfeils 28 zwischen die beiden Arbeitswalzen 10, 12 gezogen und zu einem dünnen Metallband 27 kalt abgewalzt.

Zum Regulieren der Banddicke ist es notwendig, die Walzspaltöffnung 14, d.h. den Abstand der Arbeitswalzen 10, 12, mit einer Messeinrichtung 30 kontrollieren zu können. Gemäss Fig. 1 sind, entsprechend dem bekannten Stand der Technik, zwei auf den Messflächen 16, 18 aufliegende Hebel eingezeichnet, welche eine sogenannte Messzange 29 bilden. Mit beispielsweise einer induktiven Sonde werden die Bewegungen der Messzange 29 abgetastet und auf einen Befehlsgeber 31 übertragen, welcher das Regulieren der Walzkraft und damit des Walzspaltes 14 bewirkt.

Die in Fig. 1 im Prinzip dargestellte Kaltwalzanlage entspricht, abgesehen von der Ausbildung der Messeinrichtung, einer Ausführungsform der vorliegenden Erfindung. Warmwalz- und Walzgiessanlagen sind in an sich bekannter weise analog ausgebildet.

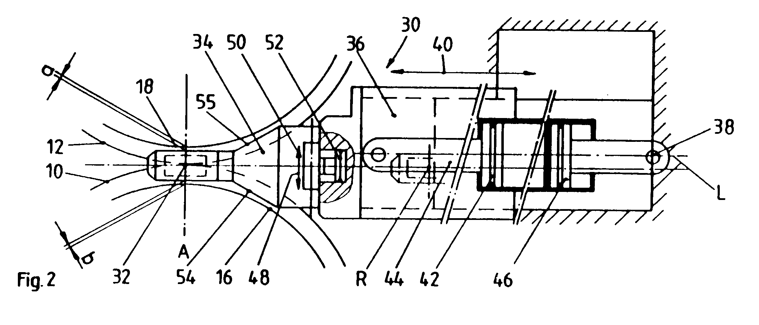

In Fig. 2 ist eine Messeinrichtung in Ar beitsposition A dargestellt. Die mit A bezeichnete, strichpunktierte Linie stellt gleichzeichtig die Walzebene, also die Verbindungsebene zwischen den Achsen der Arbeitswalzen 10, 12, dar. Die beiden Arbeitswalzen 10, 12 liegen praktisch aufeinander, der Walzspalt 14, (Fig. 1) ist sehr klein oder praktisch gleich Null. Die Messflächen 16, 18 bilden einen Zwischeraum, in welchen ein Doppelsensor 32 der Messeinrichtung 30 eingeführt ist. Dieser Doppelsensor 32 ist eingemittet, d.h. er ist exakt gleich weit von der unteren Messfläche 16 und von der oberen Messfläche 18 entfernt. Für die Ermittlung des Walzspalts zwischen den Arbeitswalzen 10, 12 wird die Summe der in Richtung A verlaufenden unteren und oberen Abstände des Doppelsensors 32 von der betreffenden Messfläche 16, 18 und der linearen Ausdehung des Doppelsensors 32 in derselben Richtung berechnet. Bei aufeinanderliegenden Arbeitswalzen 10, 12 ergibt sich für den Walzspalt ein Messwert von Null. Die Differenz zwischen dem gemessenen Wert und diesem Wert entspricht jeweils dem Walzspalt.

Der Doppelsensor 32 ist an einem Messkopf 34 befestigt, welcher seinerseits einem etwa horizontal angeordneten Ausleger 36 anliegt. Dieser Ausleger 36 ist um eine Drehachse 38 schwenkbar und in Richtung des Pfeils 40 verlängerbar. Der Doppelsensor 32 hat von der obere Messfläche 18 den Abstand a, von der unteren Messfläche 16 den Abstand b.

Die Verlängerung des Auslegers 36 erfolgt zweistufig, über einen Auslegerzylinder 42 mit Zylinderstange 44 und einem Einmittungszylinder 46. Der Ausleger 36 ist beispielsweise über einen spielfreien Horizontaltisch verschiebbar.

Der Messkopf ist in vertikaler Richtung, durch einen Pfeil 48 angedeutet, über einen spielfreien Vertikaltisch 50 verschiebbar und mit einem Klemmzylinder 52 festlegbar.

Mit R ist die Ruhe- bzw. Rückzugsposition des Doppelsensors 32, strichpunktiert angedeutet, bezeichnet. Der Wechsel von der Arbeitsposition A in die Rückzugsposition R und umgekehrt erfolgt mit Hilfe des Auslegerzylinders 42.

Das Einmitten der Messeinrichtung 30 wird wie folgt durchgeführt. Die Arbeitswalzen 10, 12 werden zusammengefahren und bei einem Walzspalt 14 (Fig. 1) von 0 mm mit definierter Anstellkraft langsam gedreht. Der Ausleger 36 fährt aus, angetrieben durch den Auslegerzylinder 42. Der Messkopf 34 mit dem Doppelsensor 32, welcher vertikal verschiebbar am Anleger 36 gelagert ist, wird zwischen die Messflächen 16, 18 geschoben. Der Messkopf 34 liegt jetzt, wegen seines Eigengewichts, auf der unteren Messfläche 16 auf. Mit dem Einmittungszylinder 46 wird nun der ganze Ausleger 36 noch weiter nach vorne geschoben. Der Messkopf 34 hebt sich, geführt durch die auf der unteren Messfläche 16 aufliegende untere Schrägfläche 54, in Richtung des Pfeils 48, bis die obere Schrägfläche 55 die obere Messfläche 18 berührt. Der Messkopf 34 wird dadurch formschlüssig ausgerichtet und eingemittet. Der Klemmzylinder 52 wird betätigt und der Messkopf 34 in dieser Position fixiert. Anschliessend wird der Einmittungszylinder wieder eingefahren, der Messkopf 34 berührt nun die Messflächen 16, 18 nicht mehr und befindet sich genau in der Pass-Linie L.

Ist dieser Einmittungsvorgang abgeschlossen, können durch Betätigung des Auslegerzylinders 42 die beiden Positionen Arbeitsstellung A und Ruhestellung R eingenommen werden.

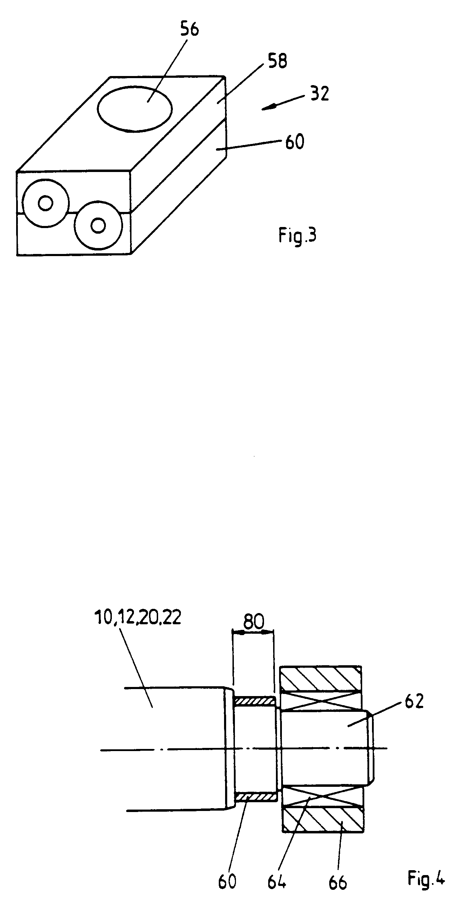

Beim perspektivisch dargestellten Doppelsensor 32 gemäss Fig. 3 ist die obere Sensorfläche 56, welche mit der oberen Gehäusehälfte 58 flächenbündig ist, sichtbar. Die der unteren Gehäusehälfte 60 zugeordnete Sensorfläche ist nicht sichtbar.

Zum Schutz der Sensorfläche 56 können nicht dargestellte überstehende Kunststoffleisten oder Platten ausgebildet sein.

Die stirnseitigen Enden einer Arbeitswalze 10, 12 oder einer Stützwalze 20, 22, von welchen in Fig. 4 eines dargestellt ist, sind über eine Länge 1 von etwa 80 mm eingedreht, wobei im vorliegenden Fall der Ballendurchmesser um etwa 8 cm reduziert ist. Darauf ist ein Messring 60 aus nicht magnetischem rostfreiem Stahl, beispielsweise V 2 A, aufgeschrumpft, die Walzenballen und die Messringe 60 werden in derselben Aufspannung überschliffen, sodass deren Oberflächen exakt coaxial sind.

Der Walzenzapfen 62 ist über ein Wälzlager 64 im Einbaustück 66, auch Lagergehäuse genannt, gelagert.

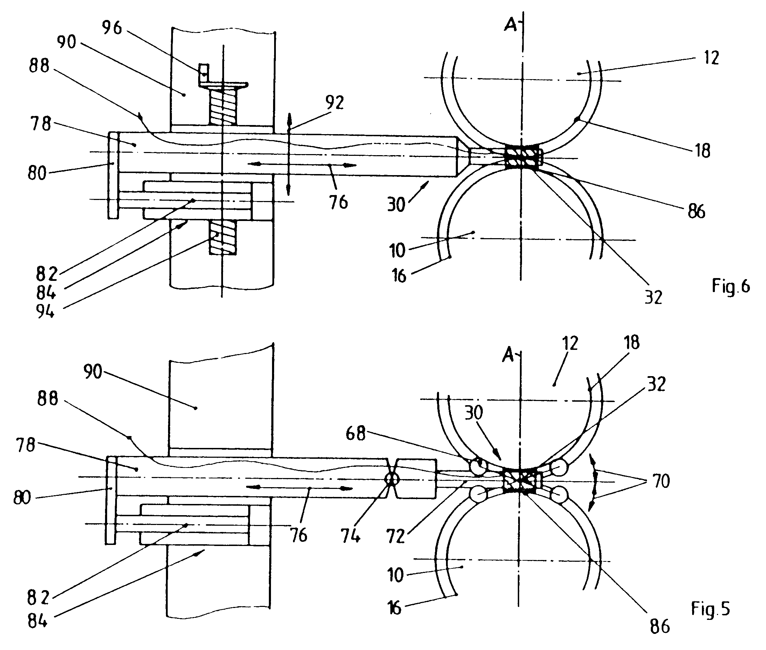

Gemäss der Variante nach Fig. 5 misst ein Doppelsensor 32, im vorliegenden Fall ein Wirbelstromsensor, nach oben und nach unten gleichzeitig die Distanz zu den Messflächen 16, 18. Der Doppelsensor 32 arbeitet berührungslos und ist unempfindlich gegen Walzöl und allfällig vorhandene Schmutzteile.

Weil der Doppelsensor 32 auf Messflächen 16, 18 aus magnetischen Materialien verschieden reagieren würde, sind die abgedrehten stirnseitigen Enden der Arbeitswalzen 10, 12 mit wenigstens einem aufgeschrumpften, nicht dargestellten Messring 60 (gemäss Fig. 4) aus rostfreiem Stahl versehen.

Der Doppelsensor 32 wird im Betrieb mit einer über Rollen auf den Messflächen 16, 18 aufliegenden Schere 68 genau in der Achsmitte der Arbeitswalze 10, 12 gehalten. Die vier endständigen Rollen der Schere 68 werden mit einem nicht dargestellten Pneumatik- oder Hydraulikzylinder leicht auf die Messflächen 16, 18 der Arbeitswalzen 10, 12 gedrückt. Da die Laufstellen ausserhalb des Messbereichs liegen, beeinflussen sie durch eine allfällige, langfristig entstehende Abnützung die Messresultate nicht.

Zum Ein- und Ausfahren der Messeinheit 30 wird die Schere 68 ganz zusammengefaltet, was mit Pfeilen 70 angedeutet ist.

Die Schere 68 ist über einen schwenkbaren Schenkel 72 mit einem Gelenk 74 verbunden, das einem in Richtung des Pfeils 76 horizontal verschiebbaren, tragfährigen Schutzgehäuse 78 anliegt. Dieses Schutzgehäuse 78 besteht im vorliegenden Fall aus einer verschweissten Stahlkonstruktion und ist über einen Vertikalträger 80 mit der Zylinderstange 82 eines horizontalen Hydraulikzylinders 84 starr verbunden. Der Hydraulikzylinder 84 dient dem Positionieren und dem Ein- und Ausfahren der Schere 68.

Die vom Doppelsensor 32 mit Wirbelstrom beaufschlagten Bereiche der Messflächen 16, 18 sind mit 86 bezeichnet. Die Messbereiche haben beispielsweise eine Ausdehnung von 4 x 2 mm. Die erzeugten Signale werden über ein am Doppelsensor 32 festinstalliertes Signalkabel 88 an einen nicht dargestellten Prozessrechner oder Aktuator weitergeleitet, wobei das Signalkabel 88 die Oeffnung im Support 90 für das Schutzgehäuse 78 und den horizontalen Hydraulikzylinder 84 durchgreift.

Die Ausführungsform nach Fig. 6 unterscheidet sich von derjenigen nach Fig. 5 im wesentlichen dadurch, dass die Einmittung des Doppelsensors 32 nicht mit einer gelenkig geführten Schere, sondern durch ein nicht nur in Richtung des Pfeils 76 horizontal, sondern auch in Richtung eines Pfeils 92 in vertikaler Richtung verschiebbaren Schutzgehäuses 78 erfolgt. Der als Wirbelstromsensor ausgebildete Doppelsensor 32 misst wiederum nach oben und nach unten gleichzeitig die Distanz zu den Messflächen 16, 18. Die vertikale Mittigkeit ist nicht sehr wesentlich, weil die beiden Messwerte gleichzeitig nach unten und oben elektronisch erfasst zusammengezählt werden.

Der Doppelsensor 32 wird mit einer Hubspindel 94, welche motorisch oder wie gezeigt mit einem Handgriff 96 betätigt wird, im Messspalt gerichtet. Für einen Walzenwechsel kann das Schutzgehäuse 78, auch als Ausleger bezeichnet, mit dem Hydraulikzylinder 84 zurückgefahren werden. Am Doppelsensor 32 ist wiederum ein Signalkabel 88 fest installiert.

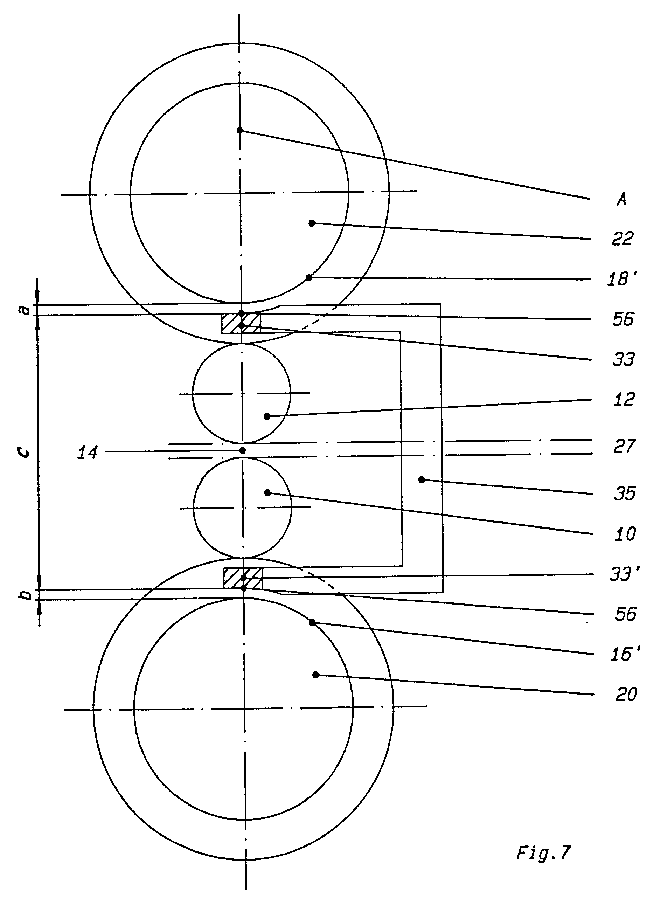

Fig. 7 deutet eine Variante einer Messeinrichtung zur Regelung des Walzspaltes in einem Quartowalzgerüst an, wobei ein Messbügel 35 in Form eines C verwendet wird. Der Messbügel 35 besteht z.B. aus einem keramischen Material. In einem Abstand a von der oberen Messfläche 18', gebildet durch ein eingedrehtes stirnseitiges Ende der oberen Stützwalze 22, allenfalls mit wenigstens einem nicht gezeigten Messring 60 (Fig. 4), ist ein auf diese Messfläche 18' gerichteter Sensor 33 angeordnet, welcher an einem Ende des Messbügels 35 befestigt ist. In einem Abstand b ist auf dem Messbügel 35 ein weiterer, auf die untere Messfläche 16' gerichteter Sensor 33' gerichtet. Die Sensoren liegen, dies ist erfindungswesentlich, im Bereich der Walzebene A.

Die Sensorflächen 56 haben einen konstanten Abstand c, welcher bei der Regelung des Walzspaltes, wo Abweichungen der Summe der Abstände a und b von einem einstellbaren Wert ermittelt werden, ausser Betracht fällt. Bei aufeinanderliegenden Arbeitswalzen 12, 14, dem Referenzwert für a und b, dürfen die Sensoren 33, 33' die Messflächen 16', 18' nicht berühren.

Das Positionieren des Messbügels 35 erfolgt z.B. analog dem Messkopf gemäss Fig. 2.

Mit auf die Messflächen 16', 18' gerichteten Sensoren 33, 33' kann der Einfluss der Walzendeformation ausgeschaltet werden.

Nach einer ersten Variante von Fig. 7 sind die Sensoren 33, 33' eines C-förmigen Messbügels 35 auf Messflächen 16, 18 (Fig. 1) der Arbeitswalzen 10, 12 gerichtet. Nach einer zweiten Variante sind auf einem C-förmigen Messbügel 35 Doppelsensoren 32 angeordnet, welche im Bereich der Walzebene A auf Messflächen 16, 18 der Arbeitswalzen 10, 12 und auf Messflächen 16', 18' der Stützwalzen 20, 22 gerichtet sind. Eine entsprechende elektronische Anordnung erlaubt die Regelung des Walzspaltes mit Hilfe der Messflächen 16, 18 und/oder 16', 18'.

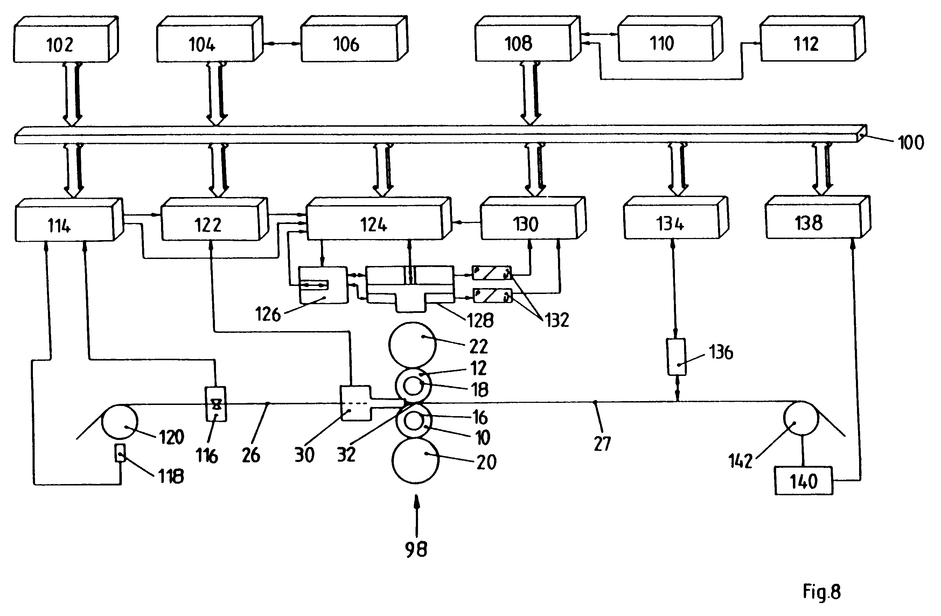

Das in Fig. 8 dargestellte Blockdiagramm zeigt eine Uebersicht über ein hydraulisches Walzspaltregelsystem eines erfindungsgemässen Quarto-Kaltwalzgerüsts 98.

Ein Datenpfad 100 ist, mit Doppelpfeilen dargestellt, mit folgenden funktionellen Einheiten, welche in den vorhergehenden Fig. 2, 5, 6 und 7 wenigstens teilweise vorhanden, aber nicht gezeichnet sind, verbunden:
- Mikroprozessorsystem 102
- Interface 104, das seinerseits mit einem Bedien- und Anzeigepanel 106 korrespondiert
- Kuppler 108, der seinerseits mit einem Pumpenaggregat 110 und der Walzwerkelektrik 112 verbunden ist
- Trendregelung 114, auf welche ein Banddickenmessgerät 116 des einlaufenden Bandes 26 und Bandgeschwindigkeitsaufnehmer 118 an einer Umlenkrolle 120 des einlaufenden Bandes 26 einwirken
- Walzspaltregelung 122, auf welche die erfindungsgemässe Messeinrichtung mit dem Doppelsensor 32 einwirkt und welche ihrerseits von der Trendregelung 114 beeinflusst wird
- Postitionsregelung 124, welche mit dem dreistufigen Servoventil 126 des hydraulischen Druckzylinders 128 für das Quarto-Kaltwalzgerüst 98 einen Regelkreis bildet und vom der Trendregelung 114 der Walzspaltregelung 122, dem hydraulischen Druckzylinder 128 beeinflusst wird
- Konstantdruckregelung 130, welche von mit dem hydraulischen Druckzylinder 128 in Verbindung stehenden Druckgebern beeinflusst wird und ihrerseits auf die Positionsregelung 124 einwirkt
- Dressiergradregelung 134, welche mit einem auf das auslaufende Metallband 27 einwirkenden Lasersensor 136 in Verbindung steht
- Banddickenregelung 138, durch Verstellen der Bandzüge, auf welche eine Zugmessdose 140 für eine Umlenkrolle 142 einwirkt.

Der Doppelsensor 32 kann auch auf der Auslaufseite angeordnet sein. Weiter können die Walzen 10,12,20,22 mit geringen Modifikationen im Regelsystem in umgekehrtem Drehsinn arbeiten, wodurch die Bandlaufrichtung wechselt.

## Patentansprüche

1. Walz- oder Walzgiessanlage (98) mit einem Walzensatz, welcher stirnseitige, coaxiale Messflächen (16,18,16', 18') auf reduzierten Ballendurchmessern aufweist, und einer Messeinrichtung (30) zur Regelung des Walzspaltes (14) zwischen den Arbeitswalzen (10,12), welche Signale zur Prozessüberwachung und -steuerung abgibt, wobei die Messeinrichtung im Bereich der Messflächen (16,18,16', 18') einen als berührungsfreien Doppelsensor (32) ausgebildeten, senkrecht zur Walzenebene (A) verschiebbaren Messkopf (34) oder einen starr ausgebildeten, C-förmigen, senkrecht zur Walzenebene (A) verschiebbaren Messbügel (35) mit zwei Sensoren umfasst,
dadurch gekennzeichnet, dass
der Messkopf (34) mit dem Doppelsensor (32) bzw. der Messbügel (35) mit den Sensoren (33,33') oder Doppelsensoren (32) in Arbeitsstellung in der Walzenebene (A) liegt, und sowohl Messkopf (34) als auch Messbügel (35) während des Walzbetriebs aus der Walzenebene (A) entfernbar und wieder in diese zurückführbar sind.

2. Anlage nach Anspruch 1, dadurch gekennzeichnet, dass auf die stirnseitigen Enden der Walzen (10, 12, 20, 22) mit reduziertem Ballendurchmesser je wenigstens ein nichtmagnetischer Messring (60) aufgebracht ist, wobei der bzw. der in radialer Richtung äusserste Messring (60) die zu den Walzenballen koaxiale Messfläche (16,18,16'18') bildet.

3. Anlage nach Anspruch 2, dadurch gekennzeichnet, dass der/die Messring/e (60) aus rostfreiem Stahl bestehen und vorzugsweise aufgeschrumpft oder mit physikalischen oder chemischen Abscheidungsverfahren aufgebracht sind.

4. Anlage nach einem der Ansprüche 1 bis 3, dadurch gekennzeichnet, dass die Sensoren (32 33, 33' ) des Messeinrichtung (30) eine Ultraschallsonde, eine Wirbelstromsonde, eine Lasersonde, eine kapazitiv oder eine induktiv arbeitende Sonde ist.

5. Anlage nach einem der Ansprüche 1 - 4, dadurch gekennzeichnet, dass der Messkopf (34) bzw. der Messbügel (35) mit den Sensoren (32, 33, 33') aus dem Bereich der Walzebene (A) in eine Ruheposition (R) entfern- und in die gleiche Walzebene (A) zurückführbar ist.

6. Anlage nach Anspruch 5, dadurch gekennzeichnet, dass der Messkopf (34) bzw der Messbügel (35) höhenverstellbar an einem Ausleger (36) befestigt ist, vorzugsweise über einen spielfreien Vertikaltisch (50) mit Klemmzylinder (52).

7. Anlage nach Anspruch 6, dadurch gekennzeichnet, dass der Ausleger (36) oder der Messbügel (35) seitlich, in der oder parallel zur Tangentialebene im Walzspalt (14), ausschwenkbar ist.

8. Anlage nach einem der Ansprüche 5 bis 7, dadurch gekennzeichnet, dass der Messkopf (34) bzw. der Messbügel (35) in Richtung des Walzspalts (14) beim Anstellen an die Messflächen (16,18) zentrierdende Anschrägungen (54,55) aufweist, welche vorzugsweise symmetrisch sind.

9. Verfahren zum Betrieb der Anlage nach einem der Ansprüche 1 - 8,
dadurch gekennzeichnet, dass
zum laufenden Kompensieren einer Exzentrität von Arbeitswalzen (10, 12) zum Walzen oder Walzgiessen die Summe der beiden Abstände (a, b) der Messflächen (16, 18, 16', 18') von den zugeordneten Sensorflächen (56) laufend gemessen und von einem Prozessrechner mit einem Soll-Wert verglichen wird, und bei einer Abweichung um mehr als einen einstellbaren wert vom Soll-Wert Aktuatoren zur Anpassung des Walzenabstandes (14) ausgelöst werden.

10. Verfahren nach Anspruch 9, dadurch gekennzeichnet, dass die Aktuatoren bei einer Abweichung von mehr als 1 - 100 µm vom Sollwert ausgelöst werden.

11. Verfahren zum Einmitten des Messeinrichtung (30) in eines Anlage nach Anspruch 8,
dadurch gekennzeichnet, dass
der vertikal verschiebbar am Ausleger (36) geführte Messkopf (34) oder Messbügel (35) durch Andrücken der Anschrägungen (54,55) auf den Messflächen (16,18) der Arbeitswalzen (10,12) mit reduziertem Ballendurchmesser oder die entsprechenden Ballenflächen formschlüssig ausgerichtet, in dieser Einmittungsposition fixiert und wieder in die Ruheposition (R) gefahren wird.

12. Verfahren nach Anspruch 11, dadurch gekennzeichnet, dass die Arbeitswalzen (10, 12) zum Einmitten zusammengefahren und mit angestelltem Messkopf (34) oder Messbügel (35) bei einem Walzspalt (14) von 0 mm mit einer Anstellkraft von 10 - 50%, vorzugsweise etwa 30%, der maximal zulässigen Walzkraft, langsam gedreht werden, bevorzugt mit einer Umfanggeschwindigkeit von 5 - 30 m/min.

## Claims

1. Rolling or continuous casting and rolling system (98) with a roll set which has front coaxial measurement surfaces (16, 18, 16', 18') on reduced barrel diameters, and a measurement device (30) to control the roll gap (14) between the working rolls (10, 12) which device emits signals for process monitoring and control, where the measurement device in the area of the measurement of the measurement surfaces (16, 18, 16', 18') comprises a measurement head (34) which can move perpendicular to the rolling plane (A) and is designed as a contact-less double sensor (32) or a rigidly formed C-shaped measurement bracket (35) with two sensors which can move perpendicular to the rolling plane (A),
characterized in that
the measurement head (34) with the double sensor (32) or the measurement bracket (35) with the sensors (33, 33') or double sensor (32), in the working position, lies in the rolling plane (A), and both the measurement head (34) and the measurement bracket (35) can be retracted from and returned to the rolling plane (A) during the rolling operation.

2. System in accordance with Claim 1, characterized in that on the face ends of the rolls (10, 12, 20, 22) with reduced barrel diameter is fitted at least one non-magnetic measurement ring (60) where the measurement ring or outer measurement ring in a radial direction (60) forms the measurement surface (16, 18, 16', 18') coaxial to the roll barrel.

3. System in accordance with Claim 2, characterized in that the measurement ring(s) (60) are made from stainless steel and are preferably shrunk on or fitted by means of a physical or chemical deposit processes.

4. System in accordance with any of Claims 1 to 3, characterized in that the sensor (32, 33, 33') of the measurement device is an ultrasound probe, an eddy current probe, a laser probe, a capacitive or inductive probe.

5. System in accordance with any of Claims 1 to 4, characterized in that the measurement head (34) or the measurement bracket (35) with the sensors (32, 33, 33') can be removed from the area of the rolling plane (A) into a rest position (R) and retracted in the same rolling plane (A).

6. System in accordance with Claim 5, characterized in that the measurement head (34) or measurement bracket (35) is attached to be height-adjustable on an extension arm (36), preferably via a play-free vertical table (50) with clamping cylinder (52).

7. System in accordance with Claim 6, characterized in that the extension arm (36) or measurement bracket (35) can swivel sideways in or parallel to the tangential plane in the roll gap (14).

8. System in accordance with any of Claims 5 to 7, characterized in that the measurement head (34) or measurement bracket (35) has chamfers (54, 55) which are preferably symmetrical and which centre on the measurement surfaces (16, 18) in the direction of the roll gap (14) when setting.

9. A process for the operation of the system in accordance with any of Claims 1 to 8,
characterized in that
for continuous compensation of any eccentricity of the working rolls (10, 12) for rolling or continuous casting and rolling, the sum of the two spacings (a, b) of the measurement surfaces (16, 18, 16', 18') is measured continuously by the allocated sensor surfaces (56) and compared by a process computer to a nominal value, and on deviations from the nominal value by more than a specified value actuators are tripped to adjust the roll gap (14).

10. Process in accordance with Claim 9, characterized in that the actuators are tripped at a deviation of more than 1 to 100 µm from the nominal value.

11. Process for centring the measurement device (30) in a system according to Claim 8,
characterized in that
the measurement head (34) or measurement bracket (35) guided to move vertically on the extension arm (36) is firmly aligned by pressure of the chamfers (54, 55) on the measurement surfaces (16, 18) of the working rolls (10, 12) with reduced barrel diameter or the corresponding barrel surfaces, fixed in this centring position and returned to the rest position (R).

12. Process in accordance with Claim 11, characterized in that the working rolls (10, 12) are moved together for centring and with the set measuring head (34) or measuring bracket (35) and a roll gap (14) of 0 mm, are slowly turned preferably with a peripheral speed of 5 - 30 m/min and a setting force of 10 - 50%, preferably around 30% of the maximum permitted rolling force.

## Revendications

1. Installation de laminage ou de laminage-coulage (98), comprenant un train de cylindres, qui possèdent sur leurs faces latérales des surfaces de mesure et de référence coaxiales (16, 18, 16', 18') sur des diamètres d'embouts réduits et un dispositif de mesure (30), servant au réglage de la fente de laminage (14) formée entre les cylindres de travail (10, 12) et fournissant des signaux utilisés pour la commande et le réglage du procédé, le dispositif de mesure étant formé par une tête de mesure (34), équipée d'un double capteur (32) sans contact mécanique et règlable verticalement par rapport au plan de laminage A, travaillant entre les surfaces de référence ( 16, 18, 16'. 18') ou un étrier rigide (35) en forme de C, et règlable verticalement par rapport au plan de laminage A et équipé de deux capteurs.
caractérisé en ce que
la tête de mesure (34) avec le capteur double (32) respectivement l'étrier de mesure (35) avec les capteurs (33, 33') ou avec un capteur double (32) se trouvent, en position de travail, dans le plan de laminage (A) et autant la tête de mesure (34) que l'étrier de mesure( 35), peuvent être rétractés du plan de laminage (A) pendant le laminage et être réengagés dans celui-ci.

2. Installation selon revendication 1, caractérisée en ce que au moins une bague de mesure non-magnétique (60) est montée le diamètre réduit des extrémités frontales des cylindres ( 10, 12, 20, 22), la bague, respectivement la dernière bague (60), vue en direction radiale formant la surface de référence et de mesure (16, 18, 16', 18') coaxiale au cylindre.

3. Installation selon revendication 2, caractérisée en ce que la/les bague/s de mesure (60) sont fabriquées en acier inoxydable et sont de préférence emmanchées à chaud ou plaquées par des techniques chimiques ou physiques de déposition.

4. Installation selon l'une des revendications 1 à 3, caractérisée en ce que les capteurs (32, 33, 33') du dispositif de mesure (30) sont des sondes à ultrasons, à courant parasite, à laser ou des sondes capacitives ou inductives.

5. Installation selon l'une des revendications 1 à 4, caractérisée en ce que la tête de mesure (34) resp. l'étrier de mesure (35) avec les capteurs (32, 33, 33') peuvent être rétractés du plan de laminage (A) et mis en position de repos (R), et réengagés dans le même plan de laminage (A).

6. Installation selon revendication 5, caractérisée en ce que la tête de mesure (34), resp. l'étrier de mesure (35) est monté à une flèche (36) de façon à pouvoir être règlés en hauteur, de préférence au moyen d'une coulisse sans jeu (50) équipée d'un blocage (52).

7. Installation selon revendication 6, caractérisée en ce que la flèche (36) ou l'étrier (35) est amovible latéralement dans un plan tangentiel à la fente de laminage (14) ou dans un plan paralèlle à ce plan tangentiel.

8. Installation selon l'une des revendications 5 à 7, caractérisée en ce que la tête de mesure (34), resp. l'étrier de mesure (35), posséde des surfaces biseautées de centrage (54, 55) de préférence symétriques, actives par rapport aux surfaces de mesure (16, 18) en direction de la fente de laminage (14).

9. Procédé de fonctionnement d'une installation selon l'une des revendications 1 à 8,
caractérisé en ce que
pour la compensation continue de l'excentricité de cylindres de travail (10, 12), utilisés pour le laminage ou le laminage-coulage, la somme des deux distances (a, b) des surfaces de mesure (16, 18, 16', 18'), par rapport aux surfaces actives des capteurs respectifs (56,) est continuellement mesurée et comparée dans un ordinateur de processus, à une dimension théorique prévue et que,
lors d'une déviation plus élevée de cette dimension prévue que la déviation préréglée, des actuateurs sont mis en marche pour la correction de la fente de laminage (14).

10. Procédé selon revendication 9, caractérisé en ce que les actuateurs sont mis en marche lors d'une déviation de plus de 1 à 100µm de la valeur théorique.

11. Procédé pour mitoyenner le dispositif de mesure (30) dans une installation selon revendication 8,
caractérisé en ce que
la tête de mesure (34) ou l'étrier (35) de mesure guidé de façon à pouvoir être déplacé verticalement sur la flèche (36) est mitoyenné en poussant les biseautages (54,55) contre les surfaces de référence (16, 18) des cylindres de travail (10,12) à diamètre d'embouts réduits ou contre les cylindres eux-mêmes, bloqués dans cette position mitoyennée et ensuite, retractés en position de repos (R).

12. Procédé selon revendication 11 caractérisé en ce que les cylindres de travail (10, 12) sont mis en contact l'un avec l'autre pour le mitoyennement sous une force de 10-50%, de préférence d'environ 30% de la pression maximum de laminage, la fente de laminage (14) étant donc de 0 mm, et mis lentement en rotation, de préférence à une vitesse circonférencielle de 5-30 m/min, la tête de mesure (34) ou l'étrier de mesure (35) étant en position de contact.
